# EUROPEAN PATENT APPLICATION

(11) **EP 2 879 422 A1**
(43) Date of publication of application: **03.06.2015**
(21) Application number: 14275123.9
(22) Date of filing: 16.05.2014
(51) Int. Cl.: H04W 12/06, H04L 29/06, H04L 12/24

(54) **BRIDGE DEVICE CONTROLLING SYSTEM, BRIDGE DEVICE, AND BRIDGE DEVICE CONTROLLING METHOD**

(30) Priority: 27.11.2013 KR 20130145396
(71) Applicant: Samsung Electro-Mechanics Co., Ltd., Gyeonggi-do (KR)
(72) Inventor: Yoon,, Dong Jin, Gyeonggi-Do (KR); Ryu,, Tae Gyu, Gyeonggi-Do (KR)
(74) Representative: Potter Clarkson LLP

(57) **Abstract**

A bridge device controlling system may include: a bridge device (100) including an authentication code; and a wireless communications terminal (200) generating authentication information (S200) depending on the authentication code (S100) provided by the bridge device (100) and providing the generated authentication information (S300) to the bridge device (100). The bridge device (100) may provide authentication authority (S600) to the wireless communications terminal (200) in the case in which the authentication information provided by the wireless communications terminal (200) coincides with preset reference information (S400, S600).

## Description

### CROSS-REFERENCE TO RELATED APPLICATION

This application claims the benefit of Korean Patent Application No. 10-2013-0145396 filed on November 27, 2013, with the Korean Intellectual Property Office, the disclosure of which is incorporated herein by reference.

### BACKGROUND

The present disclosure relates to a bridge device controlling system, a bridge device, and a bridge device controlling method.

In the case in which a bridge device is controlled by a wireless communications terminal, for example, a smartphone, a process in which the smartphone recognizes the bridge device is required. In this case, the risk that persons that do not have authority will take control of the bridge device without a separate authentication procedure or extract information may occur.

Meanwhile, in an existing scheme, a separate server was operated so as to perform the authentication procedure, in order to solve the above-mentioned problem. However, in the existing scheme in which the server is operated, the authentication procedure is relatively complicated, and a manufacturer should operate a separate server for performing the authentication procedure, which is burdensome.

The following Related Art Document (Patent Document 1), related to an authentication and authorization service system, discloses a feature for controlling access of each user to a service through authorization including authentication between a service provider and the user. However, unlike the present disclosure, Patent Document 1 does not disclose a feature of operating a server for authentication and transmitting and receiving authentication information in a wireless communications scheme to provide authentication authority.

### [Related Art Document]

(Patent Document 1) Korean Patent Laid-Open Publication No. 2003-0018946

### SUMMARY

An aspect of the present disclosure may provide a bridge device controlling system, a bridge device, and a bridge device controlling method capable of providing authentication authority for a bridge to a wireless communications terminal through a direct authentication procedure between the wireless communications terminal and the bridge without operating a separate server.

According to an aspect of the present disclosure, a bridge device controlling system may include: a bridge device including an authentication code; and a wireless communications terminal generating authentication information depending on the authentication code provided by the bridge device and providing the generated authentication information to the bridge device, wherein the bridge device provides authentication authority to the wireless communications terminal in the case in which the authentication information provided by the wireless communications terminal coincides with preset reference information.

The bridge device may include: an authentication code outputting unit including at least one of a quick response (QR) code and a light emitting diode (LED) indicator; a first wireless communications unit receiving the authentication information provided by the wireless communications terminal in a preset wireless communications scheme; a memory unit storing the preset reference information therein; and an authentication authority generating unit comparing the authentication information with the preset reference information to generate the authentication authority, and the authentication code is at least one of the QR code and LED information output from the LED indicator.

The wireless communications terminal may include: a QR code recognizing unit reading the QR code; an illumination sensing unit receiving the LED information output from the LED indicator; an authentication information generating unit generating the authentication information using at least one of the QR code and the LED information; a second wireless communications unit providing the authentication information to the bridge device in a preset wireless communications scheme; and a controlling unit controlling the bridge device depending on the authentication authority provided by the bridge device.

The authentication information generating unit may generate the authentication information by performing a preset operation between at least one of the QR code and the LED information and a preset serial number.

The preset wireless communications scheme may include a Wi-Fi communications scheme, a Bluetooth communications scheme, and a Zigbee communications scheme.

According to another aspect of the present disclosure, a bridge device may include: an authentication code outputting unit including an authentication code; a wireless communications unit receiving authentication information corresponding to the authentication code from the outside in a preset wireless communications scheme; and an authentication authority generating unit comparing the authentication information with preset reference information to generate authentication authority, wherein the authentication code outputting unit includes at least one of a QR code and an LED indicator, and the authentication code includes at least one of the QR code and LED information output from the LED indicator.

The bridge device may further include a memory unit storing the preset reference information therein.

The preset wireless communications scheme may include a Wi-Fi communications scheme, a Bluetooth communications scheme, and a Zigbee communications scheme.

The wireless communications unit may provide the authentication authority to the outside and receive a control signal from the outside depending on the authentication authority.

The authentication authority generating unit may compare a result value generated by performing an operation on the authentication information in a preset scheme with the preset reference information and generate the authentication authority in the case in which the result value coincides with the preset reference information.

According to another aspect of the present disclosure, a bridge device controlling method may include: extracting, by a wireless communications terminal, an authentication code from a bridge device; generating, by the wireless communications terminal, authentication information depending on the extracted authentication code, and providing the generated authentication information to the bridge device in a preset wireless communications scheme; receiving, from the bridge device, the authentication code, and determining whether the authentication code coincides with preset reference information; and generating, by the bridge device, authentication authority in the case in which the authentication code coincides with the preset reference information, and providing the generated authentication authority to the wireless communications terminal.

The authentication code may include at least one of a QR code and LED information output from an LED indicator.

The extracting of the authentication code may include: recognizing, by the wireless communications terminal, the QR code through a QR code recognizing unit; and receiving, from the wireless communications terminal, the LED information using an illumination sensing unit.

In the generating of the authentication information, the authentication information may be generated by performing a preset operation between at least one of the QR code and the LED information and a preset serial number.

In the generating of the authentication authority, the authentication authority may be generated in the case in which a result value generated by performing an operation on the authentication information in a preset scheme coincides with the preset reference information.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a block diagram illustrating a bridge device controlling system according to an exemplary embodiment of the present disclosure;
FIG. 2 is a detailed block diagram of a bridge device in the bridge device controlling system illustrated in FIG. 1;
FIG. 3A is a diagram illustrating an example of an authentication code outputting unit in the bridge device illustrated in FIG. 2;
FIG. 3B is a diagram illustrating another example of an authentication code outputting unit in the bridge device illustrated in FIG. 2;
FIG. 4 is a detailed block diagram of a wireless communications terminal in the bridge device controlling system illustrated in FIG. 1;
FIG. 5 is a detailed block diagram of the bridge device controlling system illustrated in FIG. 1; and
FIG. 6 is a flow chart illustrating a bridge device controlling method according to an exemplary embodiment of the present disclosure.

### DETAILED DESCRIPTION

Hereinafter, embodiments of the present disclosure will be described in detail with reference to the accompanying drawings. The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art. In the drawings, the shapes and dimensions of elements may be exaggerated for clarity, and the same reference numerals will be used throughout to designate the same or like elements.

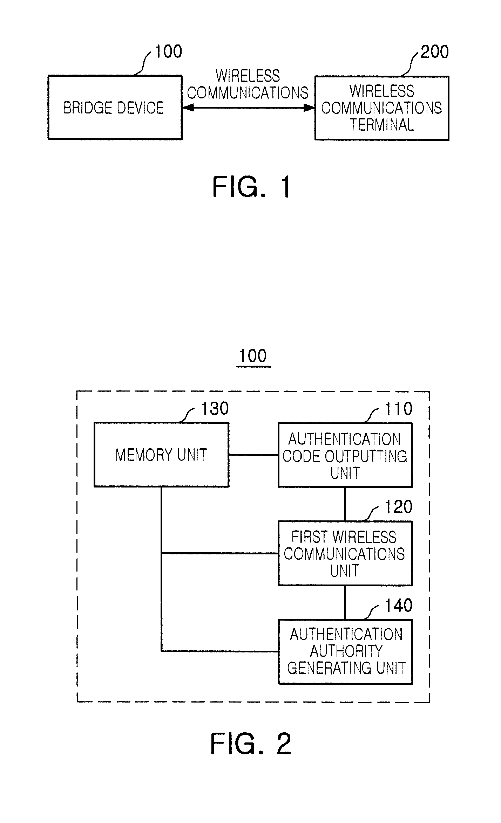

FIG. 1 is a block diagram illustrating a bridge device controlling system according to an exemplary embodiment of the present disclosure.

Referring to FIG. 1, the bridge device controlling system according to an exemplary embodiment of the present disclosure may include a bridge device 100 and a wireless communications terminal 200.

The bridge device 100 may include an authentication code, compare authentication information provided by the wireless communications terminal with preset reference information, and provide authentication authority to the wireless communications terminal 200 in the case in which the authentication information coincides with the preset reference information.

The wireless communications terminal 200 may generate the authentication information depending on the authentication code provided by the bridge device 100. In addition, the wireless communications terminal 200 may provide the generated authentication information to the bridge device 100 in a wireless communications scheme.

The bridge device 100 and the wireless communications terminal 200 will be described below in more detail with reference to FIGS. 2 through 4.

FIG. 2 is a detailed block diagram of a bridge device 100 in the bridge device controlling system illustrated in FIG. 1.

Referring to FIG. 2, the bridge device 100 may include an authentication code outputting unit 110, a first wireless communications unit 120, a memory unit 130, and an authentication authority generating unit 140.

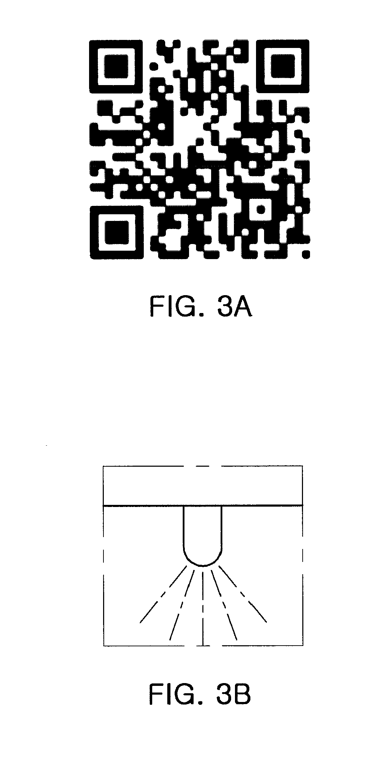

FIG. 3A is a diagram illustrating an example of an authentication code outputting unit 110 in the bridge device illustrated in FIG. 2.

FIG. 3B is a diagram illustrating another example of an authentication code outputting unit 110 in the bridge device illustrated in FIG. 2.

Referring to FIGS. 2 through 3B, the authentication code outputting unit 110 may include at least one of a quick response (QR) code and a light emitting diode (LED) indicator. In addition, the authentication code outputting unit 110 may be formed of a surface (QR code) or an output module (LED indicator) of the bridge device 100, and a recognizing means in the wireless communications terminal 200 may be changed depending on a form of the authentication code.

The first wireless communications unit 120 may receive the authentication information provided by the wireless communications terminal 200 in a preset wireless communications scheme. That is, the wireless communications terminal 200 may recognize the authentication code, generate the authentication information depending on the authentication code, and provide the generated authentication information to the first wireless communications unit 120 of the bridge device 100. Meanwhile, the preset wireless communications scheme may include a Wi-Fi communications scheme, a Bluetooth communications scheme, and a Zigbee communications scheme.

The memory unit 130 may store the preset reference information therein. Here, the preset reference information may be a unique number of the bridge device 100 to be compared with the authentication information provided by the wireless communications terminal 200.

The authentication authority generating unit 140 may compare the authentication information provided by the wireless communications terminal 200 with the stored reference information and generate the authentication authority in the case in which the authentication information coincides with the stored reference information. In addition, the authentication authority generating unit 140 may provide the generated authentication authority to the wireless communications terminal 200 using the first wireless communications unit 120. Therefore, the wireless communications terminal 200 receiving the authentication authority may control the bridge device 100.

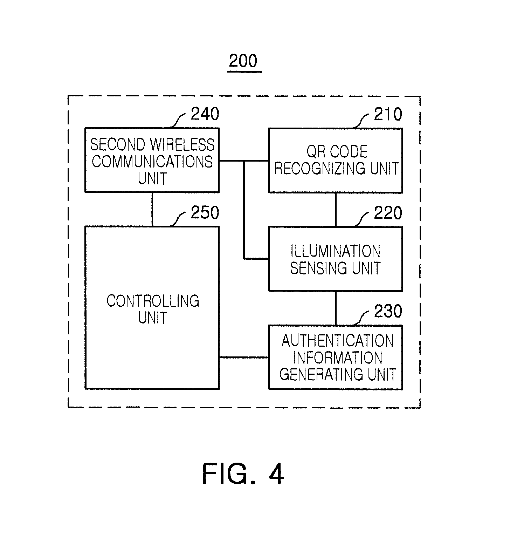

FIG. 4 is a detailed block diagram of a wireless communications terminal 200 in the bridge device controlling system illustrated in FIG. 1.

The wireless communications terminal 200 may include a QR code recognizing unit 210, an illumination sensing unit 220, an authentication information generating unit 230, a second wireless communications unit 240, and a controlling unit 250.

The QR code recognizing unit 210 may read the QR code formed on the bridge device 100 to receive the authentication code. The illumination sensing unit 220 may detect LED information output from the LED indicator formed on the bridge device 100 to receive the authentication code. That is, the wireless communications terminal 200 may receive the authentication code depending on the QR code formed on the authentication code outputting unit 110 of the bridge device 100 or the LED information output from the LED indicator formed on authentication code outputting unit 110 of the bridge device 100, using the QR code recognizing unit 210 and the illumination sensing unit 220. Then, the authentication code provided by at least one of the QR code recognizing unit 210 and the illumination sensing unit 220 may be provided to the authentication information generating unit 230.

The authentication information generating unit 230 may generate the authentication information using the provided authentication code. In more detail, the authentication information generating unit 230 may generate the authentication information by performing a preset operation between at least one of the provided QR code and LED information and a preset serial number.

Here, the serial number may be a serial number of the bridge device 100 preset in the wireless communications terminal 200, but is not limited thereto.

Then, the wireless communications unit 240 may provide the generated authentication information to the bridge device 100, more specifically, the first wireless communications unit 120 of the bridge device 100 in a preset wireless communications scheme.

Here, the preset wireless communications scheme may include the Wi-Fi communications scheme, the Bluetooth communications scheme, and the Zigbee communications scheme, as described above.

The controlling unit 250 may control the bridge device 100 depending on the authentication authority provided by the bridge device 100 after the second wireless communications unit 240 provides the authentication information to the bridge device 100.

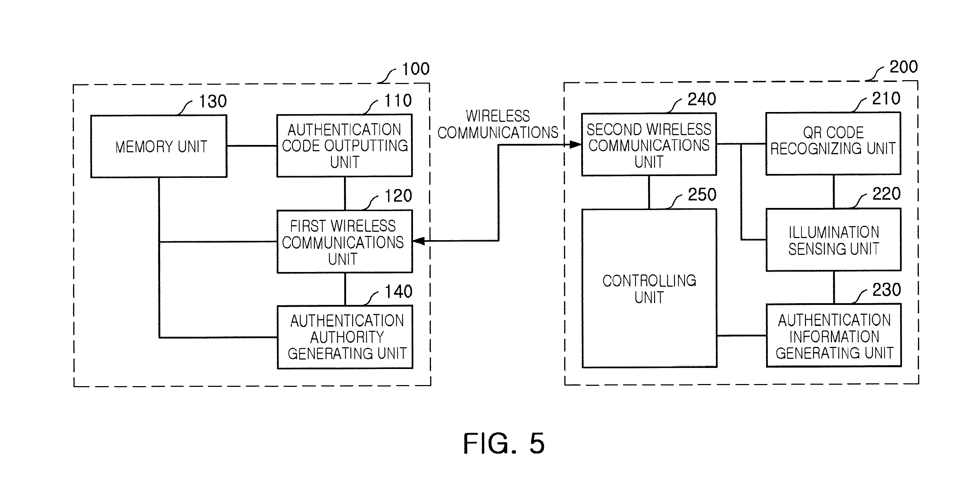

FIG. 5 is a detailed block diagram of the bridge device controlling system illustrated in FIG. 1.

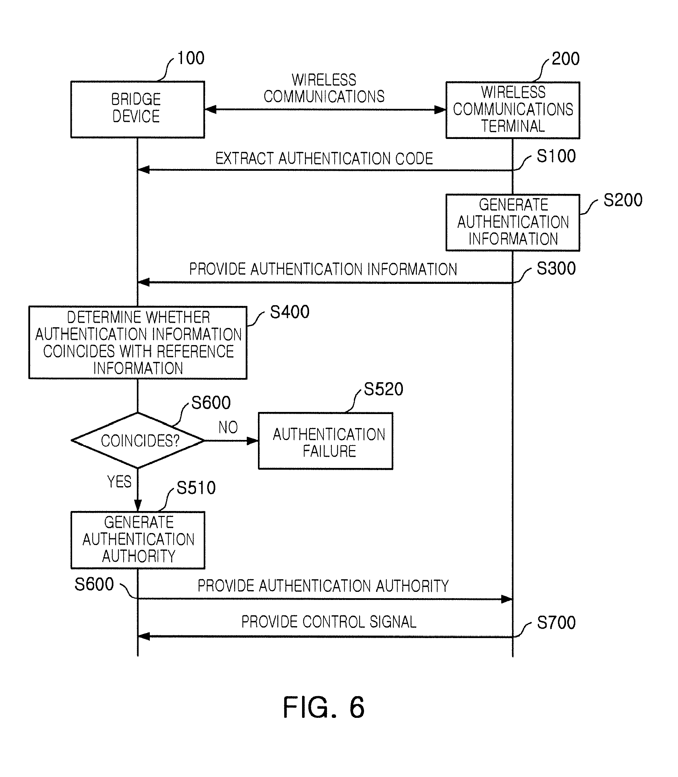

FIG. 6 is a flow chart illustrating a bridge device controlling method according to an exemplary embodiment of the present disclosure.

An operation and a bridge device control method of a bridge device controlling system according to an exemplary embodiment of the present disclosure will be described in detail with reference to FIGS. 5 and 6.

First, the wireless communications terminal 200 may extract the authentication code from one of the QR code, which is an example of the authentication code outputting unit 110 formed in the bridge device 100, and the LED information output from the LED indicator, which is another example of the authentication code outputting unit 110 formed in the bridge device 100 (S100). Then, the wireless communications terminal 200 may generate the authentication information depending on the extracted authentication code (S200). The generated authentication information may be provided to the first wireless communications unit 120 of the bridge device 100 in a wireless communications scheme preset by the second wireless communications unit 240 of the wireless communications terminal 200 (S300).

Next, the bridge device 100 may determine whether the authentication information coincides with the reference information stored in the memory unit 130 (S400). Then, in the case in which it is determined that the authentication information coincides with the reference information stored in the memory unit 130, the authentication authority generating unit 140 may generate the authentication authority (S510). However, in the case in which it is determined that the authentication information does not coincide with the reference information stored in the memory unit 130, authentication fails, such that the authentication authority generating unit 140 may not generate the authentication authority (S520).

Here, the authentication authority may be generated in the case in which a result value generated by performing an operation on the authentication information in a preset scheme coincides with the preset reference information.

The generated authentication authority may be provided to the second wireless communications unit 240 of the second wireless communications terminal 200 in the wireless communications scheme preset by the first wireless communications unit 120 of the bridge device 100.

Then, the controlling unit 250 of the wireless communications terminal 200 may provide a control signal for controlling the bridge device 100 using the provided authentication authority (S700).

As set forth above, in the bridge device controlling system, the bridge device, and the bridge device controlling method according to exemplary embodiment of the present disclosure, the authentication authority for the bridge device is provided to the wireless communications terminal through a direct authentication procedure between the bridge device and the wireless communications terminal without operating a separate server, whereby the authentication procedure may be simplified, convenience of a user may be increased, and a cost required for the authentication procedure may be decreased.

While exemplary embodiments have been shown and described above, it will be apparent to those skilled in the art that modifications and variations could be made without departing from the spirit and scope of the present disclosure as defined by the appended claims.

## Claims

1. A bridge device controlling system comprising:
a bridge device including an authentication code; and
a wireless communications terminal generating authentication information depending on the authentication code provided by the bridge device and providing the generated authentication information to the bridge device,
wherein the bridge device provides authentication authority to the wireless communications terminal in the case in which the authentication information provided by the wireless communications terminal coincides with preset reference information.

2. The bridge device controlling system of claim 1, wherein the bridge device includes:
an authentication code outputting unit including at least one of a quick response (QR) code and a light emitting diode (LED) indicator;
a first wireless communications unit receiving the authentication information provided by the wireless communications terminal in a preset wireless communications scheme;
a memory unit storing the preset reference information therein; and
an authentication authority generating unit comparing the authentication information with the preset reference information to generate the authentication authority, and
the authentication code is at least one of the QR code and LED information output from the LED indicator.

3. The bridge device controlling system of claim 2, wherein the wireless communications terminal includes:
a QR code recognizing unit reading the QR code;
an illumination sensing unit receiving the LED information output from the LED indicator;
an authentication information generating unit generating the authentication information using at least one of the QR code and the LED information;
a second wireless communications unit providing the authentication information to the bridge device in a preset wireless communications scheme; and
a controlling unit controlling the bridge device depending on the authentication authority provided by the bridge device.

4. The bridge device controlling system of claim 3, wherein the authentication information generating unit generates the authentication information by performing a preset operation between at least one of the QR code and the LED information and a preset serial number.

5. The bridge device controlling system of claim 2 or 3, wherein the preset wireless communications scheme includes a Wi-Fi communications scheme, a Bluetooth communications scheme, and a Zigbee communications scheme.

6. A bridge device comprising:
an authentication code outputting unit including an authentication code;
a wireless communications unit receiving authentication information corresponding to the authentication code from the outside in a preset wireless communications scheme; and
an authentication authority generating unit comparing the authentication information with preset reference information to generate authentication authority,
wherein the authentication code outputting unit includes at least one of a QR code and an LED indicator, and the authentication code includes at least one of the QR code and LED information output from the LED indicator.

7. The bridge device of claim 6, further comprising a memory unit storing the preset reference information therein.

8. The bridge device of claim 6, wherein the preset wireless communications scheme includes a Wi-Fi communications scheme, a Bluetooth communications scheme, and a Zigbee communications scheme.

9. The bridge device of claim 6, wherein the wireless communications unit provides the authentication authority to the outside and receives a control signal from the outside depending on the authentication authority.

10. The bridge device of claim 6, wherein the authentication authority generating unit compares a result value generated by performing an operation on the authentication information in a preset scheme with the preset reference information and generates the authentication authority in the case in which the result value coincides with the preset reference information.

11. A bridge device controlling method comprising:
extracting, by a wireless communications terminal, an authentication code from a bridge device;
generating, by the wireless communications terminal, authentication information depending on the extracted authentication code, and providing the generated authentication information to the bridge device in a preset wireless communications scheme;
receiving, from the bridge device, the authentication code, and determining whether the authentication code coincides with preset reference information; and
generating, by the bridge device, authentication authority in the case in which the authentication code coincides with the preset reference information, and providing the generated authentication authority to the wireless communications terminal.

12. The bridge device controlling method of claim 11, wherein the authentication code includes at least one of a QR code and LED information output from an LED indicator.

13. The bridge device controlling method of claim 12, wherein the extracting of the authentication code includes:
recognizing, by the wireless communications terminal, the QR code through a QR code recognizing unit; and
receiving, from the wireless communications terminal, the LED information using an illumination sensing unit.

14. The bridge device controlling method of claim 12, wherein in the generating of the authentication information, the authentication information is generated by performing a preset operation between at least one of the QR code and the LED information and a preset serial number.

15. The bridge device controlling method of claim 11, wherein in the generating of the authentication authority, the authentication authority is generated in the case in which a result value generated by performing an operation on the authentication information in a preset scheme coincides with the preset reference information.
